# EUROPEAN PATENT APPLICATION

(11) **EP 3 964 916 A1**
(43) Date of publication of application: **09.03.2022**
(21) Application number: 20386043.2
(22) Date of filing: 03.09.2020
(51) Int. Cl.: G05D 22/02, G05D 23/19, G05D 27/02

(54) **MULTIZONAL THERMOSTAT UTILIZING A.I. ALGORITHMS AND MODEL PREDICTIVE CONTROL ON THE CLOUD TO OPTIMALLY CONTROL THE HVAC SYSTEM IN A BUILDING**

(71) Applicant: Inteligg P.C., 10554 Athens (GR)
(72) Inventor: Ioakeimidis, Christos, 57001 Thermi, Thessaloniki (GR); Genikomsakis, Konstantinos, 7000 Mons (BE); Bagheri, Ali, 1060 Saint-Gilles (BE)
(74) Representative: Vavekis, Konstantinos

(57) **Abstract**

A self-learning and self-adjusting smart thermostat system based on Artificial Intelligence (AI) algorithms and Model Predictive Control (MPC) techniques deployed on the cloud, supporting multi-zonal control of heating/cooling systems for high energy savings in large and complex buildings. The smart system utilizes the processing power of cloud servers to analyze on-line occupancy, humidity and temperature data from different zones and to control the indoor temperature and humidity conditions of each zone separately ensuring maximum energy saving with the necessary degree of comfort for the building occupants (stable comfort level).

## Description

### Field of the invention

The present invention relates to a self-learning and self-adjusting smart thermostat system based on Artificial Intelligence (AI) algorithms and Model Predictive Control (MPC) techniques deployed on the cloud, supporting multi-zonal control of heating/cooling systems for high energy savings in large and complex buildings. Specifically, it implements remote control of multi-zonal heating/cooling systems via Wi-Fi connected sensors and it employs Al algorithms to automate the energy consumption behavior detection, thermal modelling of a building, energy demand prediction and optimization, as well as MPC techniques to maximize energy saving by optimally controlling the heating/cooling systems.

### Background and summary

According to relevant studies, buildings consume about 35% - 40% of total energy in EU countries, while 35%-70% of this amount of energy is used for their indoor heating / cooling systems, which is in contradiction with the European Directive 2018/844. The EU recognizes the importance of new technologies and control systems to reduce energy consumption and CO₂ emissions to low levels (<36%) by 2050 [1]. For this reason, it encourages the use of Information and Communication Technologies (ICT), and in particular Intelligent Technologies, to integrate control and automation systems into buildings that improve their energy efficiency. According to the European standard "EN15232 Energy Performance of Buildings-Impact of Building Automation", building automation systems can - depending on building type and equipment standard - produce the following potential energy savings: restaurants 31%, hotels 25%, offices 39%, shopping centers 49%, hospitals 18%, schools/universities 34% and residential 27% [2]. The current invention in alignment with the above directives, reduces the amount of energy used for the indoor heating / cooling systems by improving the current state of HVAC technology incorporating Artificial Intelligence algorithms.

Existing applications in commercial and large buildings typically need several thermostats for better energy management. This means that a thermostat needs to control different devices to meet the requirements of indoor conditions in different zones. In some cases these requirements are met by using a unified heating/cooling system with distribution pumps and valves, while in other cases, an individual system is installed in each zone. In addition to that, the algorithms for energy saving are limited for the so-called smart thermostats available in the market, but their level of smartness consists in merely being able to program the operation of the heating/cooling or HVAC system.

Multi-zone control is one of the main shortcomings of the existing smart thermostats. The available smart thermostats deal with multi-zone control in two different approaches, namely average temperature value and multi-thermostat use.

In the average temperature method [3,4], the smart thermostat is installed in one zone. Besides, several sensors are located in other zones and they send data to the thermostat base. The smart thermostat makes an average of all data and controls the building according to the average temperature of all zones. If a zone remains unoccupied for a while, its data are eliminated from the average value calculation.

This approach is rather suitable for residential applications, where usually one heating/cooling system is installed and there is a limited difference in the set temperatures between rooms, which is not the case in offices and commercial buildings. Moreover, the average temperature method does not take into account the occupancy level in different zones resulting in starting heating or cooling the building when it is occupied (so it requires 1 to 2 hours to achieve the set temperature) and the same time lag occurs when the occupants are leaving resulting in a heat loss. Also the use of the average temperature does not take into account the different needs of the zones and the building profile ending in higher waste of energy and discomfort for the occupants. The method is suitable mainly for residential application of smart thermostats because it is not complicated, it remains in the use of a family, and can be overridden by the users, whereas offices have different range of visitors, clientele, etc. who have different comfort preferences. Overall, in commercial applications of smart thermostats various zone temperatures are typically required.

The other method is to use smart thermostat for partitioning [5,6] large buildings. This approach needs to install one smart thermostat in each zone. Besides the large cost for this approach, the available platforms of smart thermostats do not support the use of many devices. In the available platforms, maximum 3 buildings or 16 thermostats can be added to an account. This is quite suitable for home applications, whereas in commercial buildings and offices usually more than 10 thermostats are installed. Also, for energy system suppliers who monitor various buildings, the definition of maximum 3 buildings is clearly not sufficient.

The aforementioned limitations of existing smart thermostats and their high prices for large buildings impose serious restrictions on their application for commercial and large buildings. In patent US9513642 [7] a system is disclosed, which combines calculations of occupancy of a building and temperature user settings, creates a temperature schedule locally or on the cloud utilizing computer algorithms and utilizes this schedule to control a HVAC system. Although this approach is more effective for energy saving than the solutions so far, it utilizes thermostats with memory, batteries and CPUs instead of simple sensors (so it has a high cost to implement and also higher energy consumption compared to a solution with sensors), it downloads the optimum schedule once per season which means that the calculations are very demanding and need time and data to execute locally or remotely to create the optimum schedule. It further needs training at the beginning which according to the patent the system needs two weeks to understand the occupants needs and behaviors which renders the invention not applicable to commercial buildings. Although it improves the current state of the art it is suitable for residential applications and not for commercial buildings where the needs change continuously, the users are every day different and new schedules are constantly required. Further, the use of thermostats and local units with strong computational power, memory and battery indicates a totally different approach than the disclosed smart thermostat which aims at collecting all the required data with simple sensors without processing power, transferring the data to the cloud servers through Wi-Fi connection, calculate the optimal temperature and control accordingly the HVAC systems.

Therefore, the disclosed smart thermostat effectively addresses these shortcomings with the specific design of a smart system utilizing the processing power of cloud servers to analyze on-line occupancy, humidity and temperature data from different zones and to control the indoor temperature and humidity conditions of each zone separately ensuring maximum energy saving with the necessary degree of comfort for the building occupants (stable comfort level). A stable comfort level is defined as 1 °C deviation from set temperature and 5% deviation from set relative humidity when the building is occupied. The data from different sensors are transferred to the cloud servers upon change detection of a measured variable, therefore it can transfer in real-time (defined as a very small period up to a few seconds to register the data to the database in the cloud) the required data to the cloud server for the optimal control of the HVAC system, differentiating from the prior art that operates based on a schedule that is periodically calculated (once per season). The disclosed invention saves a lot of bandwidth in the communications of the sensors with the cloud server by sending only the changes of the measured variables, which allows the system to achieve high response speed and better use of computation resources compared to prior art.

Further the disclosed invention uses predictive models based on the occupancy, the weather forecast, the building and zones' profiles and the user preferences, calculations allowable by the high processing power of the cloud servers and the results are forwarded to the controller of the HVAC in small time intervals.

In contrast to the various mathematical and computational methods mentioned in the prior art, in some examples the disclosed invention uses the classification method for occupancy prediction and energy demand optimization combined together, resulting in extremely faster and more precise model prediction.

Overall, the claimed invention results in higher energy savings compared to prior art, while the users' temperature and humidity requirements are fulfilled in each zone and with very fast response times.

The disclosed Smart Thermostat system measures temperature, humidity, and occupancy regularly and transfers the data to the cloud where AI algorithms and MPC techniques are deployed to enhance energy saving and to maintain suitable temperature conditions in the buildings. Further data concerning the user profiles, the building / zone profiles and external data like hourly or daily weather forecasts are further collected and included in the dataset for processing using the above technologies. After data processing, commands are sent via Wi-Fi to the control unit to switch the control line or the power line of the heating/cooling or heating, ventilation, and air conditioning (HVAC) systems on the different zones in one or more buildings, while the commands can always been overridden by the users. The system continuously updates itself through collecting new data and refining its predictive models. In some embodiments the data are sent using other wireless communication channels like 3G, 4G, 5G mobile networks.

### Brief description of the drawings

Non-limiting examples of the present disclosure will be described in the following, with reference to the appended drawings, in which:
Figure 1. HTS221 sensor for measuring temperature and relative humidity in the Smart Thermostat module: a) 3D schematic of the sensor and b) pinout of the sensor.
Figure 2. PIR sensor for movement detection: a) pyro electric infrared sensor, b) optical system for increasing detection area.
Figure 3. ESP WiFi module: a) implemented with the antenna b) pin out of ESP8266 on module ESP-12E
Figure 4. PCB design of the Smart Thermostat module of the Smart Thermostat: a) front view, b) back view.
Figure 5. Flowchart of energy saving algorithm based on occupancy detection in the Smart Thermostat.
Figure 6. Flowchart of the algorithm generating the optimized predictive model in the Smart Thermostat.
Figure 7. Client application of the Smart Thermostat: (a) Control zones dashboard, (b) Indoor/outdoor conditions overview.

### Detailed Description

The different parts of the said thermostat are described in terms of Hardware and Software. Although only a number of specific components and examples have been disclosed herein, other alternatives, modifications, uses and/or equivalents thereof are possible. Thus, the scope of the present disclosure should not be limited by the particular examples, but should be determined only by a fair reading of the claims that follow.

In the following embodiments, the hardware description introduces the electrical/electronic/mechanical components, their connections and interoperability, while the software description details the software features.

### Smart Thermostat Hardware Description

The hardware of the Smart Thermostat system disclosed herein consists of three main parts, namely the Smart Thermostat module, Smart Monitoring module and Smart Control module. The Smart Thermostat module measures temperature, humidity, and occupancy regularly and transfers the data to the cloud, where the Al and MPC algorithms are deployed for energy saving and optimization. In addition, manual set up of set temperature and humidity, and the control mode selection can be done by means of this device. In orderto provide more detailed monitoring information of large buildings, Smart Monitoring modules are included in the system. Similarly, to the Smart Thermostat module, the Smart Monitoring module measures temperature, humidity, and detects occupancy in each zone, but it does not include any setup functionalities. These modules along with the Smart Thermostat module transfer data to the cloud where Al algorithms and MPC techniques are deployed to enhance energy saving and ensure comfort in buildings. After data processing, the commands for heating, cooling, and ventilation, are sent to the Smart Control module. The command module switches the control line or the power line of the heating/cooling or heating, ventilation, and air conditioning (HVAC) systems.

### Smart Thermostat Module

The Smart Thermostat module is used for measuring temperature, humidity, and occupancy in buildings. In addition to the relevant sensors for measuring these variables (quantities), it contains also a screen, Wi-Fi module, 4 switches and the casing, as described in detail below.

### Temperature and Humidity Sensor

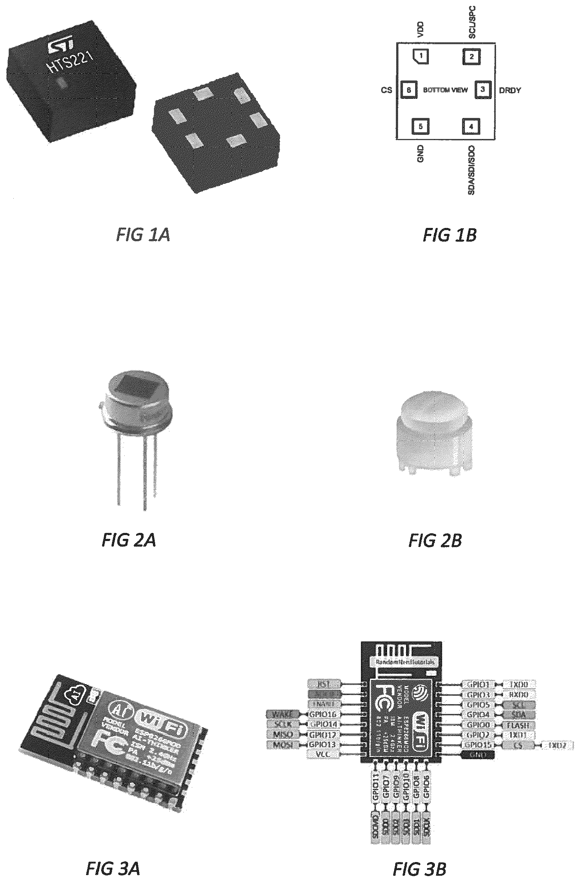

In some examples a sensor (the HTS221 sensor) for relative humidity and temperature is used as shown in Figure 1. It includes a sensing element and a mixed signal ASIC to provide the measurement information through digital serial interfaces. The sensing element consists of a polymer dielectric planar capacitor structure capable of detecting relative humidity variations and is manufactured using a dedicated ST process. The HTS221 is available in a small top-holed cap land grid array (HLGA) package guaranteed to operate over a temperature range from -40 °C to +120 °C.

The complete measurement chain consists of a low-noise capacitive amplifier, which converts the capacitive imbalance of the humidity sensor into an analog voltage signal, and an analog-to-digital converter is used to generate the digital information. The converter is coupled with a dedicated hardware (HW) averaging filter to remove the high-frequency component and reduce the serial interface traffic. The relative humidity and temperature data can be accessed through an I²C/SPI interface. The IC (integrated circuit) interface is factory-calibrated and the coefficients required for converting the ADC 16-bit values into rH% or degrees Celsius can be read through the internal registers of the sensor. Therefore, further calibration by the user is not required.

### PIR Sensor Movement Detection

In some examples a pyro electric infrared sensor as shown in Figure 2, is used for occupancy detection in buildings. When the temperature of pyro electric ceramic is changed, spontaneous polarization of ceramic is changed by the amount of temperature change. Then, the amount of electric charge is varied depending on the change of spontaneous polarization which is called Pyro electric effect.

The pyro electric infrared sensor generates a signal output when it detects temperature change of ceramic. On the other hand, the pyro electric infrared sensor does not generate a signal output when the temperature of ceramic is stable, which is not dependent on the absolute value of temperature. All object emitting infrared ray and the peak wavelength of infrared ray is corresponding to the surface temperature. However, the pyro electric ceramic itself doesn't have wavelength dependence, so an optical filter which has suitable transmittance to detect target object is put on the top of the sensor. A 5µm cut on long pass filter as an optical filter for the application of human body detection, because the peak wavelength of infrared ray emitted from human body is around 10um and 5um cut on filter has high transmittance around this wavelength. Besides the optical filter, an optical system is used to condense the infrared-ray to the element and enhance the detection area, which is represented in Figure 2b.

### WiFi Module

In some examples the WiFi module comprise of a ESP8266EX component embedded with Tensilica L106 32-bit micro controller (MCU), which features extra low power consumption and 16-bit RSIC, shown in Figure 3a. The CPU clock speed is 80MHz. It can also reach a maximum value of 160MHz. ESP8266EX is often integrated with external sensors and other specific devices through its GPIOs. ESP8266EX implements TCP/IP and full 802.11 b/g/n WLAN MAC protocol. It supports Basic Service Set (BSS) STA and SoftAP operations under the Distributed Control Function (DCF). Power management is handled with minimum host interaction to minimize active-duty period. ESP8266EX has 17 GPIO pins (Figure 3b), which can be assigned to various functions by programming the appropriate registers.

### TFT-LCD Module

In some examples a Thin Film Transistor LCD panel is used. It is a type of LCD flat panel display screen in which each pixel is controlled by one to four transistors. The TFT technology provides the best resolution of all the flat panel techniques, but it is also the most expensive. TFT screens are sometimes called active matrix LCDs. The dimension of the TFT-LCD in the Smart Thermostat module is 1.77 inches and it is normally white. It has 28×35 mm active area, with an SPI interface.

### PCB Design of the Smart Thermostat Module

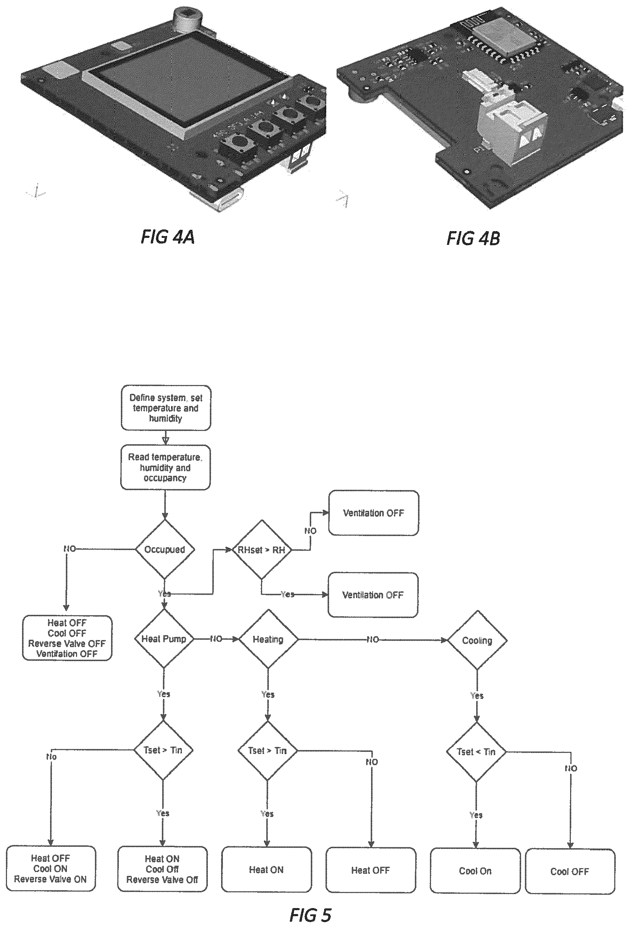

The printed circuit board (PCB) of the smart thermostat, shown in Figure 4, has been designed with the components described in the previous sub-sections. The PCB includes a USB-C port and a 3.3V power regulator. Specifically:
- The device can be powered with direct 5V power input or via a USB-C cable. The USB port provides this functionality to the thermostat to get the thermostat information on a Serial port.
- The TFT-LCD is connected to the ESP8266 module with SPI protocol.
- The PIR sensor provides analog signal on the ADC pin on ESP8266. This signal is mapped to a digital signal to define if the building is occupied or non-occupied.
- The HTS221 sensor is connected to the ESP module with I2C protocol.
- 4 switches transfer the digital signal to 4 different pins in the ESP module.

Hardware features:
- The Smart Thermostat module transfers data to the serial port on 115200 rate.
- It processes data for temperature/humidity/ and occupancy in each 15 seconds.
- In order to reduce the data transfer rate on Wi-Fi the Smart Thermostat module transfers only new variables.
   ▪ If the temperature changes by ±0.5°C in comparison to the last measurement this value will be transferred to the cloud platform.
   ▪ If the relative humidity changes by ±5% in comparison to the last measurement this value will be transferred to the cloud platform.
   • The occupancy is measured every 10 seconds, however, this value will be transferred to the server every 15 minutes.
- Four switches are designed on the Smart Thermostat module.
   ▪ Two switches are used for increasing and decreasing the values.
   ▪ One switch is used to change among different modes of control
   ▪ One switch for manual setups

In contrast to known brands of the smart thermostats and the prior art, the disclosed Thermostat module does not include extensive processing and memory in the monitoring base. The main data processing part is deployed on the cloud platform. Therefore, it reduces the energy consumption of the device significantly. Examples of available today commercial solutions designed for home applications include a large battery, around 30 MB of RAM in addition to the power input regulators and all processing components.

### Smart Monitoring Module

The Smart Monitoring module includes a sensor for temperature and humidity (in some examples an HTS221 has been used), a PIR sensor motion detection, and module for WiFi connection (in some examples the ESP8266 module has been used). Unlike the Smart Thermostat module, the Smart Monitoring module does not include a TFT-LCD and manual setup switches. The measured data are directly transferred and can be accessed from the webserver. The Smart Monitoring module, is designed to work with batteries and also a 5VDC power input. The life expectation of the device running on the battery is almost 2 years.

### Smart Control Module

The Smart Control module of the disclosed Thermostat is the part that transfers commands from the cloud platform to the heating cooling systems. In some examples, it includes eight (8) relays and an ESP module. Because smart thermostats are Wi-Fi connected and they perform extensive data processing a constant power to the device is inevitable. For this purpose, usually, a cable, called C, for powering the system is designed in devices. In many buildings, the thermostat wiring does not include the C cable. Therefore, the installation can be expensive, especially for commercial and office buildings.

The implementation of an ESP module in the Smart Control module eliminates the necessity of a C cable for the performance of the device. Instead, both Smart Thermostat and Smart Control modules are connected via the cloud server.

The Smart Control module transfers On/Off commands via 5-pin relays. These relays can control devices in the range of 5 VDC to 220 VAC. Eight (8) relays are designed in the Smart Control module to control: heating, cooling, ventilation, and reverse valves in an HVAC system.

### PCB Design of the Smart Control Module

This device can be powered with maximum 24 VAC (as it is a usual input power to many industrial HVAC control systems). In addition, it reduces the power consumption of relays. Hardware features:
- The smart control module is constantly connected to the cloud server and it receives data for each 10 seconds.
- It can be set on three modes:
   > Manual On: Turn on the system according to the set temperatures. If set temperature is above the indoor temperature it turns on the heating. If the set temperature is below the indoor temperature it turns on the cooling. The same commands work on the ventilation according to the set value on the relative humidity.
   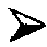 Manual Off: Turns off the system. All control signals turn to off.
   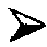 Auto: The auto setup determines the heating/cooling and ventilation commands according to three different energy management algorithms.

A further innovative characteristic of the disclosed thermostat's control unit is the support of BACnet protocol so that it can control HVACs and other temperature and climate controlling devices following a standard protocol for commercial use.

### Smart Thermostat Software Description

The disclosed smart thermostat is designed for supporting multi-zonal applications. Such applications in commercial and large buildings typically need several thermostats for better energy management. This means that a thermostat needs to control different devices to meet the requirements of indoor conditions in different zones. In some cases, these requirements are met by using a unified heating/cooling system with distribution pumps and valves, while in other cases, an individual system is installed in each zone. In addition to that, the algorithms for energy saving are limited for the so-called smart thermostats available in the market, but their level of smartness consists in merely being able to program the operation of the heating/cooling or HVAC system. Although in the prior art Artificially Intelligent algorithms are mentioned as means to optimize the energy consumption there are no evidence of their use and furthermore the processing power of the local CPUs on the thermostats are unable to provide the required processing power for advanced algorithms on a large dataset.
The aforementioned limitations of existing smart thermostats for large buildings impose serious restrictions on their application for commercial and large buildings. The disclosed smart thermostats effectively address these shortcomings with the specific design of the cloud platform which enables the end-users to introduce a large number of buildings and zones according to the requirements of the building(s) in each site. Specifically, using the unique identifier of each smart thermostat device, the user prepares the system setups in the cloud platform in three steps: building definition, zone definition, and node definition.

Building definition: This functionality allows the user to introduce new buildings. Each building is defined by its location. The building location (city) automatically updates the weather files for the building from the closest weather station. When a new building is introduced, the number of control zones and the control mode should be specified. After introducing the zone-number a special name should be assigned for each zone. It is important to combine connected different buildings data to predict the occupancy because this supports the application on multi building hotel or industrial and commercial buildings where the same people occupy different buildings and zones on different periods during the day i.e. during lunch they move to the restaurant building and zones.

Zone definition: Having defined a building, the user should assign which Smart Thermostat module is used in each zone. For this purpose, each Smart Thermostat module has a unique identifier. In each zone, one to maximum ten Smart Thermostat modules can be installed. The platform calculates the average value of installed Smart Thermostat modules in each zone. This zone can be a single zone or it can be different zones that are controlled with the same heating/cooling system.
In this way, in multi-zone cases where each zone is controlled with a different heating/cooling system and it is needed to meet the various indoor conditions, the platform can distinguish between the different Smart Thermostat modules easily, based on the system setup in the cloud platform. Besides, the Smart Control module helps to separately control each heating/cooling system. Therefore, multi-zone applications with both the features of the average temperature method and separate zone control would be accessible with the disclosed smart thermostat.

### Smart Control Strategies

Smart thermostats are typically designed to operate under three different smart control modes, as described and juxtaposed with the smart control strategies of the disclosed smart thermostat in the following subsections.

### Smart Control Algorithms in Existing Thermostats (prior art)

The existing smart control strategies in the prior art can be categorized in three groups, namely self-learning algorithm, occupancy detection algorithm, and distance detection algorithm.

Self-Learning algorithm: This algorithm is the most advanced in the available smart thermostats. The user sets the temperature at the beginning of the day and at the end of the working hours of the building. After a while, typically two weeks, the thermostat learns this setup and automatically sets the working hours and set temperatures for the home. This algorithm is not responsive to sudden changes in working hours. It has slow response if the working condition changes. If the set-ups are not introduced accurately, the thermostat fails to correct itself.

Occupancy detection algorithm: This simple algorithm is quite effective for reducing energy consumption. The algorithm follows an IF THIS THEN THAT (IFTTT) approach to control the indoor conditions based on the measurements of the motion detection in the room. Although this algorithm is quite functional, it fails to learn the occupancy performance patterns in building. The algorithm depends only on current measurements. However, because the extra sensors run on battery, to avoid the high consumption of sensors, the motion detection on added zones are usually determined for 2 hours. Thus, if a zone is unoccupied, the algorithms exclude it from the calculation of average temperature until it becomes occupied again (within the default timestep of 2 hours).

Distance detection algorithm: Thermostats that work under this algorithm are connected to a smartphone in order to retrieve the user location from the GPS data (coordinates) of his/her smartphone. If the user's location is found within a defined range from the building, the thermostat assumes that the building is occupied or probably occupied and sets the indoor conditions according to the user's preferences. This algorithm can keep the comfort in a high level, however, the user must share its GPS data regularly which is not always of the interest of some users.
In all three configurations, the systems referred in the prior art, postpone the starting point of the heating/cooling system which reduces the comfort level in the building in the starting hours. The occupants have to wait for a while until the heating and cooling system reaches the set points. On the other hand, the systems keep running until the last moment that the building is occupied. Consequently, it consumes energy when the building does not need a high comfort level.

### Smart Thermostat Control Algorithms

The disclosed smart thermostat introduces a higher level of "intelligence" to achieve even higher energy savings in comparison to other smart thermostats by using advanced computational techniques.
In order to overcome this issue, an occupancy detection algorithm is designed on the cloud platform. This algorithm works on the occupancy prediction in the building for the next hour. For this purpose, a time cluster is prepared in the cloud platform. The time cluster breaks the continuous time to month (0-11), day (0-30), and hour (0-23). Then, the forth column is the measurement of the occupancy sensor. After that, a Random Forest classifier from the *scikit learn* package in Python is used for model preparation and prediction. A random forest is a meta-estimator that fits a number of decision tree classifiers on various sub-samples of the dataset and uses averaging to improve the predictive accuracy and control over-fitting.
Then, a model is fit to the occupancy data and the clustered time. The data is saved for maximum one year on the cloud platform, but the model is processed for the last 2 months. When a model is prepared, a prediction of occupancy in the building is made for the next hour. This time, an algorithm similar to the energy saving algorithm (Figure 5) controls the heating and cooling system, but instead of the values from the motion detection sensor, the occupancy prediction is used to make a decision on the occupancy in the building. In addition, as long as this algorithm is repeated for every hour, the algorithm determines and corrects its decision continuously.
The advantage of this algorithm is that it predicts the occupancy one hour earlier. Thus, the occupancy prediction algorithm keeps higher comfort level at the beginning of the working hours. The system has one hour to reach the set point. In addition, it also shuts down the system an hour earlier. Therefore, it prevents the unnecessary energy consumption in the late working hours. Occupancy prediction algorithm increases the thermostat intelligence to a level in which that the indoor temperatures and humidity can be managed without user interference.

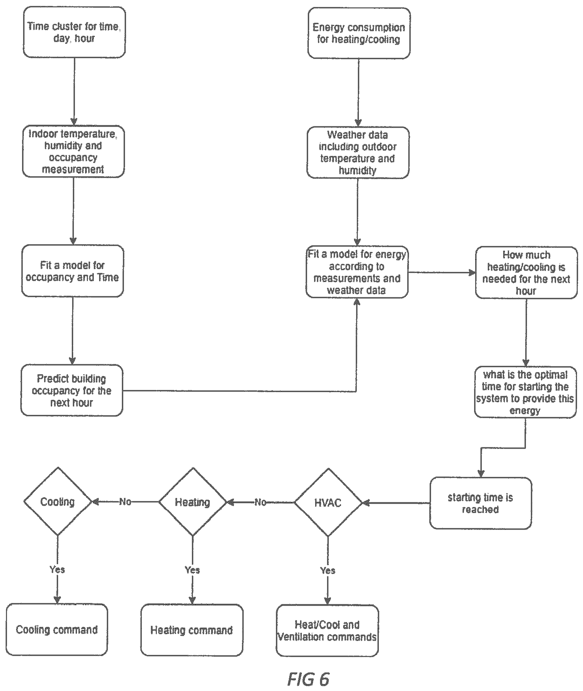

Model predictive algorithm: This is the most sophisticated algorithm in the disclosed smart thermostat. In addition to the time cluster, the algorithm saves the indoor temperatures, indoor humidity, occupancy, heating/cooling load, outdoor temperature, and outdoor humidity. Using these measurements, a dataset is constructed for data-fitting of two models using the Random Forest classifier. Specifically, one model fits the data to the occupancy, while the other model fits the energy (heating/cooling load) consumption to the indoor/outdoor conditions and occupancy (thermal model of the building). The thermal model of the building is defined as the optimized prediction model. Similarly, to the occupancy prediction algorithm, the server saves data for one year and uses the last 2 months for data fitting.
In the next step, the occupancy model predicts whether the building is occupied for the next hour or not. In addition, the weather data forecast provides the information for outdoor temperature and humidity for the next hour. According to this information, the optimized prediction model, determines if the building needs heating/cooling for the next hour. When the algorithm determines this need, it also calculates how much energy should be injected to the building to keep the comfort conditions (model predictive approach). According to the system definitions (nominal power, COP, etc.), the algorithm calculates the starting time of the heating/cooling system. The main advantage of this algorithm is that it postpones the starting time of the heating system to the utmost point. In addition, it shuts down the system at the earliest time. Eventually, maximum comfort will be achieved with the optimized performance of the heating/cooling systems. Figure 6 presents the flowchart of the model predictive algorithm.

### Smart Thermostat Backend Service Implementation

A website and a mobile application provide the user with an easy and seamless way to monitor the indoor and outdoor conditions of a building, the energy consumption of its control systems (heating/cooling/ventilation) as well as customize the control process. Sensor and command switches (modules) are grouped in different control zones within a building and multiple buildings can be managed through one user account.

### Device - Server Communication

All communication between the devices (sensors, switches) and the cloud platform (server) takes place via standard *http* requests. The main data transfering operations are:
- *Uploading sensor data.* A sensor module features three types of sensors: temperature sensor, humidity sensor and occupancy detector which perform measurements at a user specified frequency. So, the payload of the data sending request is a tuple (temperature, humidity, occupancy, sensor_id)
   where sensor_id is a unique identifier used by the server to map data to their corresponding buildings/ control zones.
   - *Receiving control-command.* Command switches perform requests to the server at regular intervals, again by specifying their unique identifier and receive a 4-bit (0 or 1) value which indicates the input to the control systems:
      [1st stage heating, 2nd stage heating, 1st stage cooling, 2nd stage cooling, Ventilation, R_valve, Auxiliary 1, Auxiliary 2]

### Control Algorithms

All computations for controlling the systems and optimizing energy consumption take place on the Cloud platform (not in the devices or the client app). Hence, the control algorithm can implement complex computations using current and past user data as well as predictions made with machine learning approaches.

### Inputs:

- control mode (user input)
- current temperature/humidity/occupancy values
- desired values
- history of past values
- outdoor weather conditions
- weather forecast
- control zones arrangement in the building (number of zones ,number of sensors in each zone)

### Output:

- Command values to be sent to the devices

The control process can implement one of the following three algorithms:
- *Energy Saving.* This algorithm only considers current values of temperature, humidity and occupancy, target values set by the user as well as outdoor conditions in order to turn on or off the corresponding systems. It provides a simple and efficient method to perform *immediate* control of a building's conditions.
- *Occupancy Prediction.* This algorithm uses a history of occupancy values to predict if a building will be occupied at a certain period of time. (For example, in the case of an office building it is more likely to be unoccupied in the weekend). This done with an ensemble of decision trees (random forest classifier) which receives the occupancy history and predicts the most likely occupancy value for a specified moment of time. So, this algorithm is used to define a control strategy for a building (or zone in a building) based on its usage characteristics.
- Model Predictive. This algorithm is used to optimize the energy consumption of the building based on recorded consumptions values with respect to the indoor and outdoor conditions at the particular time. It calculates the exact moment that a particular system should be turned on or off in order to achieve the desired conditions with the minimum amount of energy consumption. With sufficient data gathered, this algorithm can *learn* the particular characteristics of a space and adjust the control outputs to them.

Of course the user has the ability to override these automated control modes and manually turn on or off any of his/her systems.

### Cloud platform (Web server) - client apps

The web-server runs on Amazon Web Services Ligtsail. A MySQL database is used for storing and fetching all necessary data and Python to run all data processing algorithms.

The website and mobile application provide a user friendly interface for viewing collected sensor data, monitoring systems consumption and defining control strategies.

More specifically, the user can:
1. View current temperature/humidity/occupancy zonal values
2. View, filter and download history of collected data
3. View weather data
4. Define the desired values
5. Add /remove sensor/ command modules
6. Change the control algorithm and mode
7. View energy consumption graphs
8. Define zone configuration

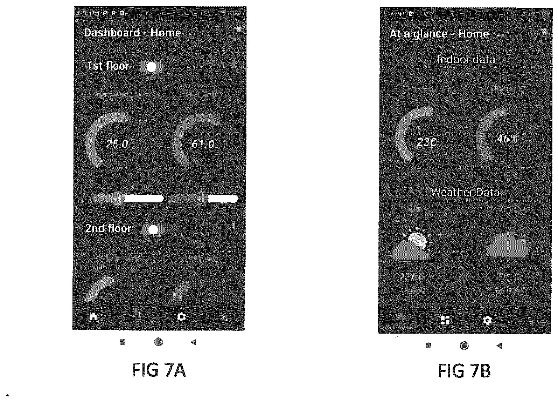

Figure 7 shows indicative examples of the aforementioned functionalities.

### References

[1] G. Martinopoulos, K. T. Papakostas, A. M. Papadopoulos, "A comparative review of heating systems in EU countries, based on efficiency and fuel cost", Renewable and Sustainable Energy Reviews, Volume 90, Pages 687-699, 2018
[2] DIN-German Institute of Standards, "Energieeffizienz vonGebäuden-Einfluss von Gebäudeautomation und Gebäudemanagement," DIN EN 15232, pp. Berlin,Germany: Deutsche Fassung., 2007
[3] https://www.ecobee.com/wp-content/uploads/2020/02/eco-EMV-Executive-Summary.pdf
[4] https://www.indoorclimatesolutions.net/files/347-10647.pdf
[5] https://storage.googleapis.com/nest-public-downloads/efficiency_simulation_white_paper.pdf
[6] https://www.mdpi.com/2071-1050/9/8/1462/pdf
[7] US 9513642 B2, Google LLC, 2012.

## Claims

1. A temperature and humidity control system, comprising:
of one or more heating, ventilation, and air conditioning (HVAC) units that provide heating and/or cooling for one or more zones of one or more buildings,
one or more thermostat system comprising
one or more temperature and humidity sensors,
one or more occupancy sensors,
one or more wireless communication modules,
one or more power sources,
and which the thermostat system is configured to
send in small time intervals measurements of changes in the temperature, humidity and occupancy measured by the sensors of the zones of the buildings to a cloud server, wherein the cloud server is configured to execute one or more computer algorithms for occupancy prediction coupled with energy minimization and to generate an optimized prediction model for the one or more HVAC of the buildings based on the historical temperature, humidity and occupancy data of the said buildings and of weather forecast and current outdoor conditions, and to send in real-time the optimized prediction model to the thermostat system for the control of the HVACs units,
**characterized in that**
all the data processing takes place on the cloud server to create the optimized prediction model,
the cloud server is configured to combine the optimized prediction model with the current occupancy data and to send the commands to the said HVAC units through the thermostat,
and that the computer algorithms are Artificial Intelligence algorithms and Model Predictive Control techniques designed to predict thermal behavior of each zone independently of one to the other.

2. A temperature and humidity control system according to claim 1, which is configured to use the computer algorithms of the type Random Forest classifier.

3. A temperature and humidity control system according to claim 1 or 2, configured to fit a dataset consisting of the data of the last 2 months or less.

4. A temperature and humidity control system according to any of the previous claims, wherein the wireless communication module is configured to transfer the data between the sensors, the thermostat and the cloud server by Wi-Fi or by 3G or by 4G or by 5G cellular network technologies.

5. A temperature and humidity control system according to any of the previous claims, wherein the thermostat is configured to control the HVACs by BACnet protocol.

6. A method of controlling a temperature and humidity control system, the method comprising:
- Collecting occupancy, temperature and humidity data from sensors located in one or more zones in one or more buildings.Transferring the changes of the data through wireless communication to a cloud server on-line.
- Calculating on the cloud server an optimized prediction model for temperature, humidity and occupancy to control the different zones of the different buildings utilizing Artificial Intelligence to fit historical occupancy, temperature and humidity data combined with user preferences, weather forecasts and outdoor conditions to optimize the energy consumption while maintaining a stable comfort level.
- Sending real-time through wireless communication the optimized prediction model combined with current occupancy data to control one or more HVAC systems in the different zones of the different buildings.

7. A method of controlling a temperature and humidity control system according to claim 6, wherein the algorithm used on the cloud server to generate the optimized prediction model is of the type Random Forest classifier using historical data of 2 months or less.

8. A method of controlling a temperature and humidity control system according to any of the claims 6 or 7, wherein the commands to control the HVAC are following the BACnet protocol.
